# NEUE EUROPÄISCHE PATENTSCHRIFT

(11) **EP 0 712 195 B2**
(45) Veröffentlichungstag und Bekanntmachung des Hinweises auf die Entscheidung über den Einspruch: **07.04.2004**
(45) Hinweis auf die Patenterteilung: 26.08.1998
(21) Anmeldenummer: 95117177.6
(22) Anmeldetag: 31.10.1995
(51) Int. Cl.: H02K 5/14

(54) **Elektromotorischer Antrieb für ein stirnseitig an einem Motorgehäuse anflanschbares Aggregat**
Electric motor drive for a unit axially plonge mounted on the motor housing
Entraînement à moteur électrique pour une unité fixée axialement par bride au boîtier du moteur

(30) Priorität: 12.11.1994 DE 4440479
(43) Veröffentlichungstag der Anmeldung: 15.05.1996
(73) Patentinhaber: TEMIC Automotive Electric Motors GmbH, 26133 Oldenburg (DE)
(72) Erfinder: Blumenberg, Rainer, D-26123 Oldenburg (DE)
(74) Vertreter: Blum, Klaus-Dieter

(56) Entgegenhaltungen:
- EP-A- 0 335 352
- EP-A- 0 384 686
- EP-B- 0 489 077
- WO-A-91/03095
- WO-A-95/08209
- DE-A- 3 804 677
- DE-U- 9 100 843
- FR-A- 2 271 693
- FR-A- 2 530 885
- US-A- 4 396 850

## Beschreibung

Die Erfindung betrifft einen elektromotorischen Antrieb für ein stirnseitig an einem Motorgehäuse anflanschbares Aggregat der im Oberbegriff des Patentanspruchs 1 angegebenen Art.

Durch die EP 0472 746 A1 ist bereits ein Elektromotor bekannt, bei dem aus der durch ein Lagerschild abgeschlossenen Stirnseite eines topfförmigen Motorgehäuses die Rotorwelle mit einem Exzenterwellenende herausragt, das die Stößel einer angeflanschten Hydraulikpumpe antreibt. In dem Lagerschild ist außerdem eine getrennte Tragplatte für Bürsten vorgesehen, die mit dem am Antrieb vorgesehenen Kommutator in bekannterweise zusammenwirken. Hierbei ist die Bürstentragplatte unmittelbar mit dem Lagerschild verbunden, wodurch sowohl eine Schwingungsentkopplung als auch eine akustische Entkopplung der auf der Bürstentragplatte angeordneten Bauteile vom Gehäuse nicht gegeben ist.

Weiterhin ist durch die DE-G 9401 357.8 eine elektrische Kommutatormaschine bekannt, bei der die Bürstentragplatte über gummielastische Dämpfelemente an der Innenwand des Motorgehäuses abgestützt ist. Hierdurch wird zwar eine Schwingungsentkopplung zwischen der Tragplatte und dem Motorgehäuse erzielt, aber zum Abdichten des Motorgehäuses gegen Feuchtigkeitseintritt ist ein gesondertes Dichtungselement erforderlich.

Die PCT-Anmeldung WO-A-95 08 209 gemäß Artikel 54(3) EPÜ betrifft einen elektromotorischen Antrieb mit einer gedämpft gelagerten Bürstentragplatte, wobei ein Dämpfungsring vorgesehen ist, welcher das Motorgehäuse gleichzeitig feuchtigkeitsdicht abdichtet.

Auch offenbart die französische Patentanmeldung FR-A-2 271 693 einen elektromotorischen Antrieb, wobei die Bürstentragplatte mittels einzelner Dämpfungselemente gegen Geräuscherzeugung gedämpft gelagert ist. Hierbei sind insbesondere drei um 120 Grad versetzt zueinander angeordnete Dämpfungselemente vorgesehen, die keine umlaufende Dichtung des Motorgehäuses gegen Feuchtigkeitseintritt ermöglichen.

Die EP 489 077 B1 offenbart einen Elektromotor in geschlossener Bauart, bei dem die Bürstenplatte aus einem Polyamid und die Isolierstoff-Durchführung sowie der Dichtring mit seinen Halterungsstegen aus einem Elastomer bestehen. Ferner ist eine umlaufende Ringnut vorgesehen, in der der Dichtring fixiert ist. Da die Bürstenplatte direkt an dem Lagerschild anliegt, ermöglicht der Dichtring eine Feuchtigkeitsdichtung des Motorgehäuses, jedoch keine Schwingungsentkopplung zwischen den Bürstenplatten und dem Motorgehäuse. Eine Geräuschreduzierung ist in der EP 489 077 B1 nicht beschrieben.

Die DE-U1 9 100 843 beschreibt einen Bürstenhalter für Gleichstrommaschinen mit einer Bürstenplatte und einem am Maschinengehäuse befestigbaren Haltebügel, an dem die Bürstenplatte Geräusch entkoppelt aufgehängt ist. Die Bürstentrageplatte ist hierbei mittels Gummipuffer an einem Haltebügel befestigt, der seinerseits an der Stirnseite des Motorgehäuses befestigt ist. Hierdurch wird zwar eine Schwingungsentkoppelung zwischen der Trageplatte und dem Motorgehäuse erzielt, aber ein Abdichten des Motorgehäuses gegen Feuchtigkeitseintritt ist dadurch nicht gewährleistet. Auch bildet der Gummipuffer kein Dämpfungsmittel.

Aus der DE 38 04 677 A1 ist eine dichtende Anschlußanordnung für einen Elektromotor zu entnehmen, bei der zwischen dem Gehäuse des Elektromotors und einem Ansatzgehäuse für ein davon angetriebenes Aggregat eine Leiterplatte angeordnet ist, welche ein Führungsgehäuse für Kohlebürsten aufnimmt. Es ist eine Dichtscheibe vorgesehen, welche eine feuchtigkeitsundurchlässige Abdichtung zwischen Motorgehäuse und Ansatzgehäuse ermöglicht. Zumindest die Dichtscheibe überdeckt dabei den Gehäusestirnrand und in einer bevorzugten Ausgestaltung umgibt die Dichtscheibe die Leiterplatte beidseitig, wobei auch die Leiterplatte den Gehäusestirnrand seitlich überragt und die Dichtscheibe zur Aufnahme der Leiterplatte taschenförmig ausgebildet oder vom Dichtscheibenmaterial umspritzt ausgestaltet ist. Die Abdichtung erfolgt durch rein axiales Anpressen von Motor- und Ansatzgehäuse.

Der Erfindung liegt die Aufgabe zugrunde, einen elektromotorischen Antrieb mit einem Kommutatormotor zu schaffen, der einfach und billig herzustellen ist, dabei eine wirksame Schwingungsentkopplung zwischen der Tragplatte und dem Motorgehäuse ermöglicht und dessen Motorgehäuse eine sichere Feuchtigkeitsdichtung gewährleistet. Diese Aufgabe wird durch die im Patentanspruch 1 gekennzeichneten Merkmale gelöst.

Der erfindungsgemäße Antrieb zeichnet sich durch eine hohe Geräuscharmut bei einfacher Fertigungstechnik und Montage aus.

Weitere vorteilhafte Ausgestaltungen des Erfindungsgegenstand sind den weiteren Unteransprüchen zu entnehmen.

Die Erfindung wir anhand eines Ausführungsbeispieles im folgenden näher beschreiben. Es zeigen:
- **Figur 1**: einen Längsschnitt durch einen Kommutatormotor für einen elektromotorischen Antrieb,
- **Figur 2**: einen Querschnitt durch den Kommutatormotor mit einer Draufsicht auf die Bürstentragplatte und
- **Figur 3**: eine Einzelheit aus Figur 2 mit einer Durchführung für ein Anschlußkabel.

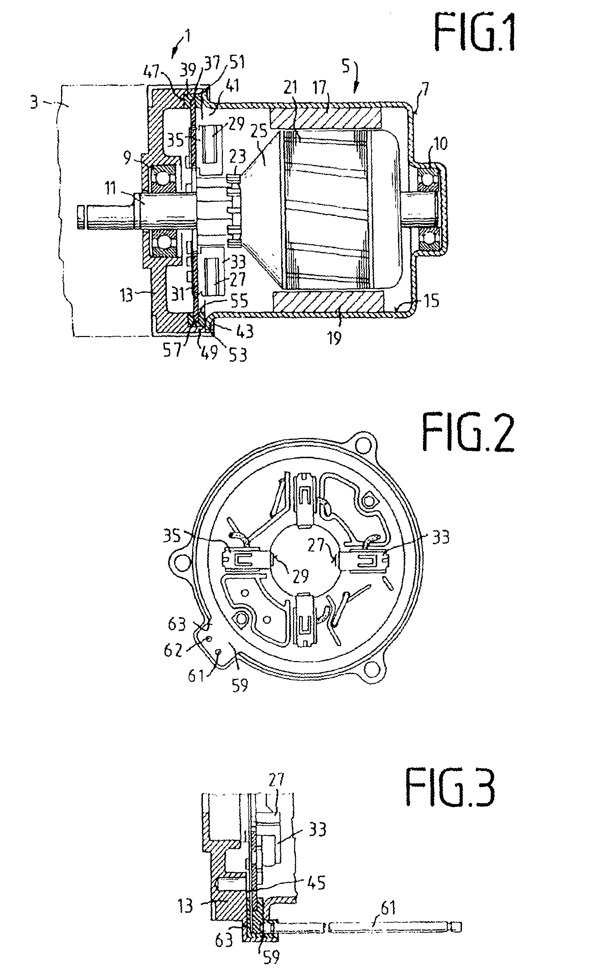

Die **Figur 1** zeigt einen elektromotorischen Antrieb für ein stimseitig an einem Motorgehäuse anflanschbares Aggregat mit einem geschlossenen, freuchtigkeitsdichten Kommutatormotor 1. Dieses in einem Ansatzgehäuse 3 angeordnete Aggregat kann aus einer Hydraulikpumpe einer Antiblockier- Bremseinrichtung, einem Getriebe für einen Fensterscheibenantrieb oder aus einem sonstigen Aggregat bestehen. Der Kommutatormotor 1 hat ein Motorgehäuse 5, das ein topfförmiges Gehäuseteil 7 und ein ein Lager 9 für eine in dem Motorgehäuse 5 drehbar gelagerte Rotorwelle 11 aufnehmendes Lagerschild 13 aufweist. Das zum Stator gehörende Gehäuseteil 7 ist auf der Innenoberfläche 15 mit Permanentmagneten 17, 19 versehen. In dem Motorgehäuse ist die Rotorwelle 11 mit einem darauf befestigten Rotorblechpaket 21 angeordnet, daß eine an einem Kommutator 23 angeschlossene Rotorwicklung 25 aufweist. Der Kommutator 23 steht mit durch nicht dargestellten Federn beaufschlagten Kommutatorbürsten 27, 29 in Kontaktverbindung, welche in auf einer Tragplatte 31 befestigten Köchern 33, 35 verschiebbar gelagert sind. Die Tragplatte 31 wird feststehend in dem Motorgehäuse 5 gehalten. Die Rotorwelle 11 ist einerseits in dem Lager 9 des Lagerschildes 13 und andererseits in einem zweiten Lager 10 in dem topfförmigen Gehäuseteil 7 drehbar gelagert.

Die Tragplatte 31 ist über ein an ihrem Außenrand 37 umlaufend befestigten Dämpfungsring 39 in dem Motorgehäuse 5 derart abgestützt gelagert, daß der Dämpfungsring 39 das Motorgehäuse 5 gleichzeitig feuchtigkeitsdicht abdichtet. Hierdurch wird einerseits eine einfache Schwingungsentkopplung zwischen der Tragplatte 31 und dem Motorgehäuse 5 und andererseits eine sichere Feuchtigkeitsabdichtung auf einfachste Weise erzielt. Das topfförmige Gehäuseteil 7 weist einen um seine Öffnung 41 radial nach außen gerichteten, ringförmigen Befestigungsflansch 43 auf, welcher mit der dem topfförmigen Gehäuseteil 7 zugewandten Stirnfläche 45 des Lagerschildes 13 fest verbindbar ist und durch welchen der Dämpfungsring 39 gegen eine Lagerfläche 47 in der Stirnfläche 45 des Lagerschildes 13 preßbar ist. Eine sichere Feuchtigkeitsdichtung zwischen dem topfförmigen Gehäuseteil 7 und dem Lagerschild 13 wird dadurch erzielt, daß der Dämpfungsring 39 nach dem Befestigen des topfförmigen Gehäuseteiles 7 mit dem Lagerschild 13 leicht verformt wird. Die Stirnfläche 45 des Lagerschildes 13 weist eine vertieft angeordnete, ringförmige Lagerfläche 49 für den Befestigungsflansch 43 auf, an welche sich eine konzentrisch zu dieser abgestufte Vertiefung mit den ringförmigen Lagerflächen 47 für den Dämpfungsring 39 anschließt. Der Außenrand 51 des Befestigungsflansches 43 wird durch einen vorstehenden Umlaufrand 53 auf der ringförmigen Lagerfläche 49 formschlüssig zentriert. Die Befestigung des topfförmigen Gehäuseteiles 7 mit dem Lagerschild 13 erfolgt über nicht näher dargestellte Befestigungsschrauben.

Der Dämpfungsring 39 weist gemäß den Figuren einen rechteckförmigen oder quadratischen Querschnitt auf, wobei die Innenumfangsfläche 55 des Dämpfungsringes 39 mit einer umlaufenden Aufnahmenut 57 für den Außenrand 37 der Tragplatte 31 versehen ist. Hierdurch wird eine einfache Befestigung des Dämpfungsringes 39 mit dem Außenrand 37 der Tragplatte 31 erzielt. Der Dämpfungsring 39 bestellt übrigens aus einem elastischen Material, z. B. aus einem Elastomer.

Im Rahmen der Erfindung kann der Dämpfungsring 39 auch durch einen Spritzvorgang an der Tragplatte 31 eingeordnet werden.

In vorteilhafter Ausgestaltung ist an dem Dämpfungsring 39 eine dichtende Durchführung 59 zum Herausführen der mit der Bürstentragplatte 31 kontaktierten Anschlußleitungen 61, 62 einstückig angeordnet. Bei der Montage wird die Durchführung 59 einer ihrer Form entsprechend ausgebildeten Ausnehlnung 63 in dem Lagerschild 13 dichtend eingesetzt. Hierdurch wird gleichzeitig eine Zentrierung des Dämpfungsringes 39 erzielt.

## Patentansprüche

1. Elektromotorischer Antrieb
(a) für ein stirnseitig an einem Motorgehäuse anflanschbares Aggregat mit einem Kommutatormotor,
(b) dessen Motorgehäuse (5) aus einem topfförmigen Gehäuseteil (7) und einem ein Lager (9) für die Rotorwelle (11) aufnehmenden Lagerschild (13) besteht,
(c)welches einerseits mit dem topfförmigen Gehäuseteil (7) und andererseits mit einem das Aggregat aufnehmenden Ansatzgehäuse (3) fest verbunden ist, und
(d) der eine geräuschgedämpfte Bürstenhalterung mit einer in dem Motorgehäuse (5) feststehend gehaltenen Tragplatte (31) und darauf befestigten Köchern (33,35) zur verschieblichen Aufnahme jeweils einer Kommutatorbürste (27,29) aufweist,
(e)wobei die Tragplatte (31) über einen an ihrem Außenrand sowie beidstirnseitig umlaufend befestigten Dämpfungsring (39) in dem Motorgehäuse (5) abgestützt gelagert ist und der Dämpfungsring (39) das Motorgehäuse (5) gleichzeitig feuchtigkeitsdicht abdichtet,
(f)wobei die dem topfförmigen Gehäuseteil (7) zugewandte Stirnfläche (45) des Lagerschildes (13) eine vertieft angeordnete, ringförmige Lagerfläche (49) für einen um die Öffnung (41) des Gehäuseteiles (7) radial nach außen gerichteten, ringförmigen Befestigungsflansch (43) aufweist,
(g) bei dessen Befestigung sein Außenrand (51) durch einen vorstehenden Umlaufrand (53) auf der Lagerfläche (49) formschlüssig zentrierbar und
(h) der Dämpfungsring (39) unter leichter Verformung gegen eine ringförmige, als konzentrische an die ringförmige Lagerfläche (49) für den Befestigungsflansch (43) sich anschließende, abgestufte Vertiefung ausgebildete Lagerfläche (47) in der Stirnfläche (45) des Lagerschildes (13) pressbar ist.

2. Antrieb nach Anspruch 1,
**dadurch gekennzeichnet,**
**daß** der Dämpfungsring (39) einen rechteckförmigen oder quadratischen Querschnitt aufweist und daß die Innenumfangsfläche (55) des Dämpfungsringes (39) mit einer umlaufenden Aufnahmenut (57) für den Außenrand (37) der Tragplatte (31) versehen ist.

3. Antrieb nach Anspruch 1 oder 2,
**dadurch gekennzeichnet,**
**daß** der Dämpfungsring (39) aus einem Elastomer besteht.

4. Antrieb nach Anspruch 1, 2, oder 3,
**dadurch gekennzeichnet,**
**daß** der Dämpfungsring (39) aus einem an der Tragplatte (31) durch Anspritzen befestigten Spritzteil besteht.

5. Antrieb nach einem der vorhergehenden Ansprüche,
**dadurch gekennzeichnet,**
**daß** eine dichtende Durchführung (59) an dem Dämpfungsring (39) zum Herausführen der mit der Bürstentragplatte (31) kontaktierten Anschlußleitungen (61, 62) einstückig angeordnet ist.

## Claims

1. Electric motor drive
(a) for an assembly which can be flanged on an end face of a motor housing, with a commutator motor,
(b) the motor housing (5) of which consists of a cup-shaped housing part (7) and a bearing plate (13) which receives a bearing (9) for the rotor shaft (11) and
(c) which is firmly connected on the one hand to the cup-shaped housing part (7) and on the other hand to an attached housing (3) which receives the assembly,
(d) the said drive also including a soundproofed brush mounting with a supporting plate (31) held stationary in the motor housing (5) and cases (33, 35) fixed thereon for displaceably receiving a commutator brush (27, 29) in each case,
(e) wherein the supporting plate (31) is mounted so that it is supported in the motor housing (5) by way of a damping ring (39), which is fixed to its outer rim and extends around both sides, and at the same time the damping ring (39) seals the motor housing (5) so that it is moistureproof,
(f) wherein the front face (45) of the bearing plate (13) facing the cup-shaped housing part (7) has a recessed annular bearing surface (49) for an annular fixing flange (43) which is directed radially outwards around the opening (41) in the housing part (7),
(g) such that when this flange is fixed its outer rim (51) can be positively centred by a projecting circumferential rim (53) on the bearing surface (49) and
(h) the damping ring (39) can be slightly deformed and pressed against an annular bearing surface (47) which is in the front face (45) of the bearing plate (13) and which is formed as a stepped recess concentrically adjoining the annular bearing surface (49) for the fixing flange (43).

2. Drive as claimed in Claim 1, **characterised in that** the damping ring (39) has a rectangular or square cross-section and that the inner circumferential surface (55) of the damping ring (39) is provided with a circumferential receiving groove (57) for the outer rim (37) of the supporting plate (31).

3. Drive as claimed in Claim 1 or 2, **characterised in that** the damping ring (39) is made from an elastomer.

4. Drive as claimed in Claim 1, 2 or 3, **characterised in that** the damping ring (39) is made from an injection moulded part which is fixed by injection moulding on the supporting plate (31).

5. Drive as claimed in one of the preceding claims, **characterised in that** a sealing feedthrough (59) is integrally disposed on the damping ring (39) for ducting out the connecting leads (61, 62) which are contacted with the brush supporting plate (31).

## Revendications

1. Entraînement à moteur électrique
(a) pour une unité susceptible d'être bridée du côté frontal sur un carter de moteur et comportant un moteur électrique à collecteur
(b) dont le carter de moteur (5) est constitué par une partie de carter (7) en forme de pot et par un flasque (13) qui reçoit un palier (9) pour l'arbre de rotor (11),
(c) qui est relié fermement d'une part à la partie de carter (7) en forme de pot et d'autre part à un carter de raccordement (3) recevant l'unité, et
(d) ledit moteur électrique à collecteur comprenant une monture de balais amortie vis-à-vis des bruits avec une plaque porteuse (31) retenue de façon fixe dans le carter de moteur (5) et avec des porte-balais tubulaires (33, 35) fixés sur ladite plaque porteuse pour la réception mobile de balais de collecteur respectifs (27, 29),
(e) la plaque porteuse (31) étant montée en appui dans le carter de moteur (5) par l'intermédiaire d'une bague d'amortissement (39) fixée sur celle-ci, et la bague d'amortissement (39) étanchant simultanément le carter de moteur (5) à l'encontre de l'humidité,
(f) dans lequel la surface frontale (45) du flasque (13) orientée vers la partie de carter (7) en forme de pot comporte une surface de montage annulaire (49) agencée en renfoncement pour une bride de fixation annulaire (43) qui est dirigée radialement vers l'extérieur autour de l'ouverture (41) de la partie de carter (7),
(g) dont la bordure extérieure (51) est susceptible d'être centrée, lors de sa fixation, en coopération de formes par une bordure périphérique en saillie (53) sur la surface de montage (49), et
(h) la bague d'amortissement (39) est susceptible d'être pressée sous une légère déformation contre une surface de montage annulaire (47) dans la surface frontale (45) du flasque (13), ladite surface de montage annulaire (47) étant réalisée comme un renfoncement en gradins qui se raccorde concentriquement à la surface de montage annulaire (49) pour la bride de fixation (43).

2. Entraînement selon l'une ou l'autre des revendications 1 et 2, **caractérisé en ce que** la bague d'amortissement (39) présente une section transversale rectangulaire ou carrée, et **en ce que** la surface périphérique intérieure (55) de la bague d'amortissement (39) est pourvue d'une gorge de réception périphérique (57) pour la bordure extérieure (37) de la plaque porteuse (31).

3. Entraînement selon l'une quelconque des revendications 1, 2 ou 3, **caractérisé en ce que** la bague d'amortissement (39) est constituée en élastomère.

4. Entraînement selon l'une quelconque des revendications 1, 2, 3 ou 4, **caractérisé en ce que** la bague d'amortissement (39) est constituée par une pièce injectée fixée par injection sur la plaque porteuse (31).

5. Entraînement selon l'une quelconque des revendications précédentes, **caractérisé en ce qu'**un passage étanche (59) est prévu en une seule pièce sur la bague d'amortissement (39) pour faire sortir les lignes de connexion (61, 62) en contact avec la plaque porteuse des balais (31).
